# EUROPEAN PATENT APPLICATION

(11) **EP 2 200 168 A1**
(43) Date of publication of application: **23.06.2010**
(21) Application number: 08838492.0
(22) Date of filing: 06.10.2008
(51) Int. Cl.: H02M 7/48

(54) **INVERTER**

(30) Priority: 12.10.2007 JP 2007266164
(71) Applicant: Daikin Industries, Ltd., Osaka 530-8323 (JP)
(72) Inventor: MECHI, Abdallah, Kusatsu-shi Shiga 525-8526 (JP)
(74) Representative: HOFFMANN EITLE
(86) International application number: PCT/JP2008/068150
(87) International publication number: WO 2009/048037

(57) **Abstract**

The present invention aims to increase an electrolytic capacitor life, and accordingly to increase an inverter life without further increasing an electrostatic capacitance of an electrolytic capacitor employed for a DC link capacitor or employing an electrolytic capacitor which has a small loss. The inverter includes an electrolytic capacitor 3 which receives DC power, a series resonant circuit 4 connected in parallel with the electrolytic capacitor, and a switching device group 5 which converts the DC power into AC power by switching using pulse width modulation.

## Description

### Technical Field

The present invention relates to an inverter, and more particularly, to improvement of its life.

### Background Art

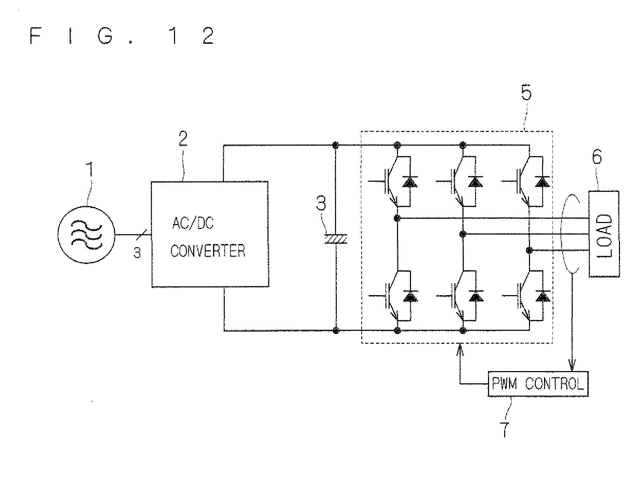

FIG. 12 is a circuit diagram showing a configuration for performing conventional AC-AC conversion. An AC/DC converter 2 receives AC power from an AC power supply 1 (for example, of three phases), and converts this into DC power. A DC link capacitor 3 receives the DC power. A switching device group 5 converts the DC power into multi-phase, for example, three-phase alternating current, and supplies to a load 6. The switching device group 5 performs switching using pulse width modulation based on an instruction of a PWM control unit 7.

Prior art documents related to the present invention are as follows.

Patent Document 1: EP 1780882 A1
Patent Document 2: US 2004/0207463 A1
Patent Document 3: Japanese Patent Application Laid-Open No. 05-219741

### Disclosure of Invention

### Problems to be Solved by the Invention

The DC link capacitor 3 is typically required to have a large electrostatic capacitance for performing a smoothing function. Further, in order to increase the electrostatic capacitance, an electrolytic capacitor is typically used for the DC link capacitor 3. The electrolytic capacitor has a larger loss compared with other capacitor, for example, a film capacitor.

Meanwhile, switching using pulse width modulation is likely to reduce power consumption, but tends to generate an AC component. This AC component flows through the electrolytic capacitor, and thus a loss of the electrolytic capacitor increases, which causes a rise in temperature.

The temperature rise as described above reduces life of the DC link capacitor 3, and accordingly reduces life of the inverter including this and the switching device group 5.

In order to reduce such temperature rise, it is conceivable to further increase the electrostatic capacitance of the DC link capacitor 3 or employ a high-grade product which has a small loss. However, those ways incur a cost increase.

Therefore, an object of the present invention is to increase an electrolytic capacitor life and accordingly to increase an inverter life without further increasing an electrostatic capacitor of an electrolytic capacitor employed for a DC link capacitor or employing an electrolytic capacitor which has a small loss.

### Means to Solve the Problems

According to a first aspect of the present invention, an inverter includes: an electrolytic capacitor (3) receiving DC power; a series resonant circuit (4) connected in parallel with the electrolytic capacitor; and a switching device group (5) converting the DC power into AC power by switching using pulse width modulation.

According to a second aspect of the inverter of the present invention, in the first aspect, a resonance frequency of the series resonant circuit (4) is a switching frequency of the switching device group (5).

According to a third aspect of the inverter of the present invention, in the first aspect, a resonance frequency of the series resonant circuit (4) coincides with a frequency of one showing a largest component among harmonics of the switching frequency of the switching device group (5).

According to a fourth aspect of the inverter of the present invention, in the third aspect, the resonance frequency of the series resonant circuit (4) is twice as large as the switching frequency of the switching device group (5).

According to a fifth aspect of the inverter of the present invention, in any ane of the first to fourth aspects, the series resonant circuit (4) has series connection between a resonant inductor (41) and a resonant capacitor (42); and the resonant capacitor is a film capacitor.

### Effects of the Invention

According to the first aspect of the inverter of the present invention, alternating current generated accompanying with the switching flows through the series resonant circuit, and thus the alternating current is removed from the current flowing through the electrolytic capacitor. As a result, an electrolytic capacitor life is increased, leading to a longer inverter life.

According to the second aspect of the inverter of the present invention, the alternating current generated accompanying with the switching flows efficiently through the series resonant circuit in a case where a carrier in pulse width modulation is a sawtooth wave.

According to the third aspect of the inverter of the present invention, a harmonic flows efficiently through the series resonant circuit.

According to the fourth aspect of the inverter of the present invention, a harmonic flows efficiently through the series resonant circuit in a case where the carrier in pulse width modulation is a triangular wave.

According to the fifth aspect of the inverter of the present invention, an electrostatic capacitance required for the resonant capacitor is smaller compared with the electrolytic capacitor, and thus a film capacitor is capable of being used for the resonant capacitor. Therefore, a resonant capacitor life increases, leading to a longer inverter life.

These and other objects, features, aspects and advantages of the present invention will become more apparent from the following detailed description of the present invention when taken in conjunction with the accompanying drawings.

### Brief Description of Drawings

[FIG. 1] A circuit diagram showing a configuration for performing AC-AC conversion by employing an inverter according to the present invention.
[FIG. 2] A circuit diagram according to a first embodiment.
[FIG. 3] A graph showing waveforms of currents to be compared with the first embodiment.
[FIG. 4] A graph showing spectra of the currents to be compared with the first embodiment.
[FIG. 5] A graph showing waveforms of currents according to the first embodiment.
[FIG. 6] A graph showing spectra of the currents according to the first embodiment.
[FIG. 7] A circuit diagram according to a second embodiment.
[FIG. 8] A graph showing waveforms of currents to be compared with the second embodiment.
[FIG. 9] A graph showing spectra of the currents to be compared with the second embodiment.
[FIG. 10] A graph showing waveforms of currents according to the second embodiment.
[FIG. 11] A graph showing spectra of the currents according to the second embodiment.
[FIG. 12] A circuit diagram showing a configuration for performing conventional AC-AC conversion.

### Best Modes for Carrying Out the Invention

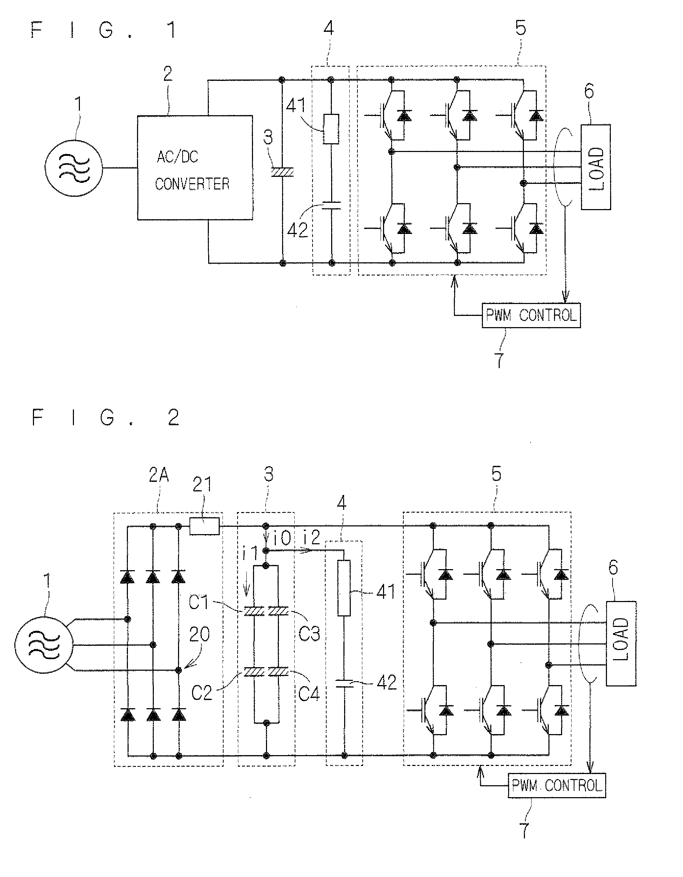

FIG. 1 is a circuit diagram showing a configuration for performing AC-AC conversion by employing an inverter according to the present invention. The inverter includes a DC link capacitor 3, a series resonant circuit 4 and a switching device group 5.

An AC/DC converter 2 receives AC power from an AC power supply 1 (for example, of three phases) and converts this into DC power. The AC/DC converter 2 may employ a typical rectifier circuit of a passive device or an active converter using an active device.

The DC link capacitor 3 receives the aforementioned DC power. Then, the switching device group 5 converts the DC power into multi-phase, for example, three-phase alternating current to supply to a load 6. A PWM control unit 7 monitors a current or a voltage of the three-phase alternating current, to thereby issue an instruction for performing pulse width modulation. This instruction is supplied to the switching device group 5, and switching using pulse width modulation is performed by the switching device group 5. The switching device group 5 may employ a publicly-known configuration using, for example, an insulated gate bipolar transistor (IGBT).

The present invention is **characterized in that** an electrolytic capacitor is used for the DC link capacitor 3, and that the series resonant circuit 4 connected in parallel with the electrolytic capacitor is provided. An alternating current generated accompanying with the switching is caused to flow through the series resonant circuit while causing the DC link capacitor 3 to perform a smoothing function of removing a pulsating current by using the electrolytic capacitor. As a result, the alternating current is removed from the current flowing through the electrolytic capacitor. Therefore, an electrolytic capacitor life is increased, which accordingly increases an inverter life. Moreover, there is no need to further increase an electrostatic capacitance of the electrolytic capacitor or employ an electrolytic capacitor which has a small loss.

In a case where the carrier employed in pulse width modulation is a sawtooth wave, a resonance frequency of the series resonant circuit 4 is desirably selected to be a switching frequency of the switching device group 5. This is because an AC component of the frequency becomes the highest.

Further, the resonance frequency of the series resonant circuit 4 may coincide with a frequency of one having the largest component among harmonics of the switching frequency of the switching device group 5. This is because a harmonic flows efficiently through the series resonant circuit. For example, in a case where a carrier employed in pulse width modulation is a triangular wave, the resonance frequency of the series resonant circuit 4 is desirably selected to be twice as large as the switching frequency of the switching device group 5.

The series resonant circuit 4 has series connection between a resonant inductor 41 and a resonant capacitor 42. An electrostatic capacitance required for the resonant capacitor 41 is smaller than an electrostatic capacitance required for the DC link capacitor 3, whereby a film capacitor may be used. The film capacitor has a small loss, and thus life of the resonant capacitor 41 is increased, leading to a longer inverter life. For example, a value required for the electrostatic capacitance of the resonant capacitor 42 is one of several tens of the electrostatic capacitance required for the DC link capacitor 3.

A plurality of the series resonant circuits 4 may be provided in parallel with the DC link capacitor 3. A resonance frequency of each thereof is adjusted, and a plurality of harmonics are bypassed.

Hereinafter, effects of the embodiments of the present invention will be specifically described.

### First Embodiment

FIG. 2 is a circuit diagram according to a first embodiment, which specifically shows the configuration shown in FIG. 1 as follows. As the AC/DC converter 2, a rectifier circuit 2A formed of a passive device is used. As the DC link capacitor 3, series-parallel connection of four capacitors C1 to C4 is used.

The rectifier circuit 2A includes a diode bridge 20 which performs three-phase full wave rectification and a reactor 21 inserted in a DC link bus on a positive side. In the present embodiment, three coils having an inductance of 6 mH are provided to be connected in parallel as the reactor 21, which shows an inductance of 2 mH in actuality.

In the DC link capacitor 3, the capacitors C1 and C2 are connected in series between the positive side and a negative side of the DC link bus, and the capacitors C3 and C4 are connected in series between the positive side and the negative side of the DC link bus. The electrostatic capacitances of the capacitors C1 to C4 are typically selected to be equal to each other, and thus the electrostatic capacitance of the DC link capacitor 3 is equal to the respective electrostatic capacitances of C1 to C4. In the present embodiment, 850 µF is employed as this electrostatic capacitance.

In the present embodiment, the resonant inductor 41 and the resonant capacitor 42 have an inductance of 9 µH and an electrostatic capacitance of 20 µF, respectively.

Hereinafter, the effects of the present embodiment will be described by examining a current i0 flowing through the DC link capacitor 3 and the series resonant circuit 4, a current i1 flowing through the capacitor C1, and a current i2 flowing through the series resonant circuit 4.

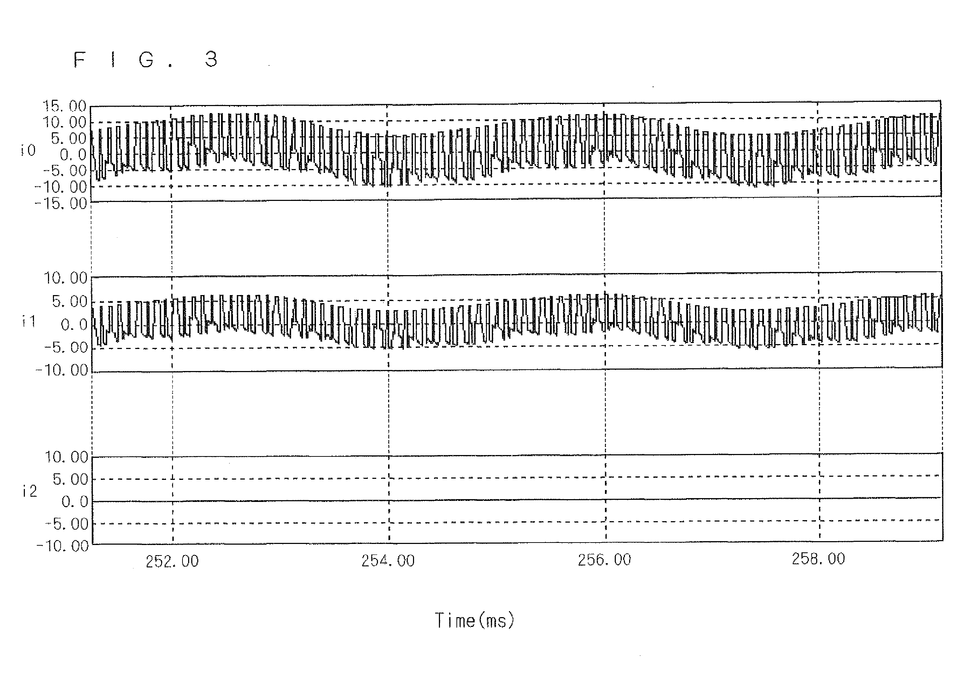

FIG. 3 is a graph showing simulation results of current waveforms in a circuit in a case where the series resonant circuit 4 is not provided (comparison target in the present embodiment). There is no path through which the current i2 flows because the circuit in the case where the series resonant circuit 4 is not provided is examined, but the current i2 is indicated by zero for the sake of convenience.

Here, an effective value of a current supplied to the load 6 is 10.3 A, a degree of modulation is 1, and an effective value of the current i0 is 7.20 A.

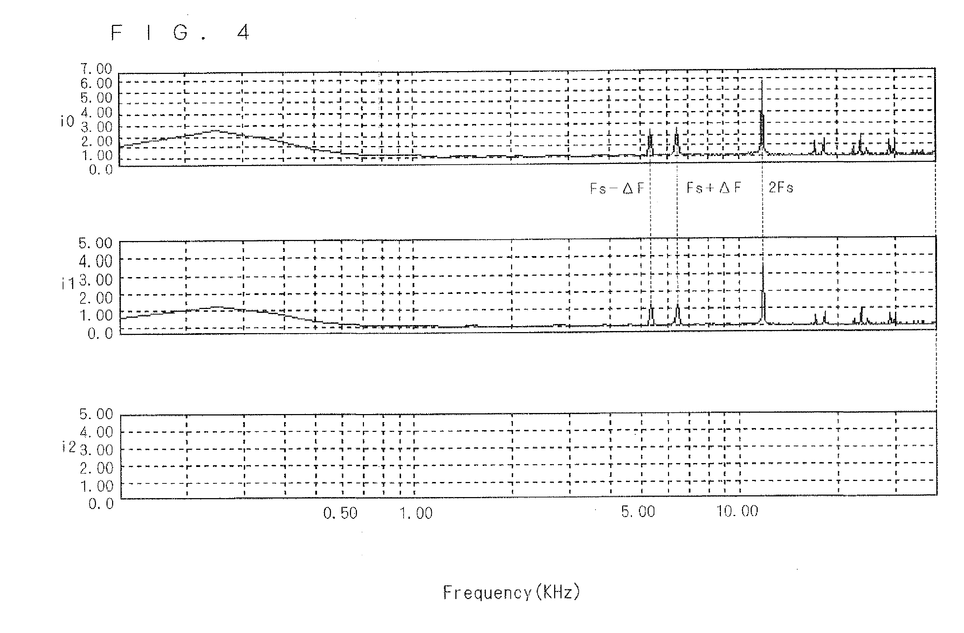

FIG. 4 is a graph showing simulation results of current spectra in the circuit in the case where the series resonance circuit 4 is not provided. Two peaks (frequencies Fs-ΔF, Fs+ΔF) of PWM modulation appear with a switching frequency Fs being the center. Here, the switching frequency Fs is 6 kHz, and further, a triangular wave is employed as a carrier in PWM modulation, whereby the peak of a harmonic appears at a frequency of 2Fs.

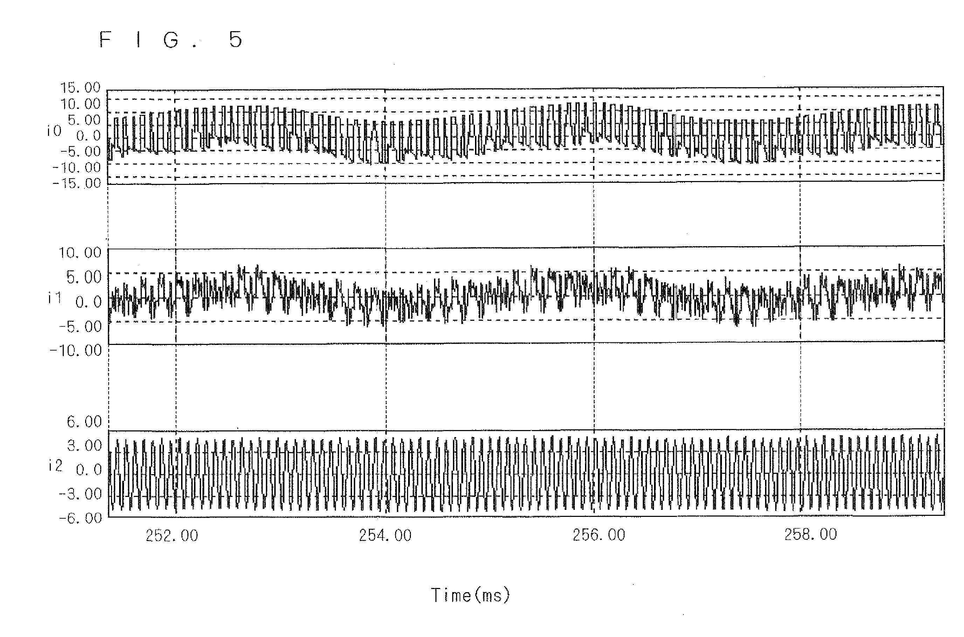

FIG. 5 is a graph showing simulation results of current waveforms in the circuit in a case where the series resonant circuit 4 is provided. The current i0 is branched into two currents i1 and the current i2. In order to make conditions the same as in the case where the series resonant circuit 4 is not provided, the same conditions as in the case where the series resonant circuit 4 is not provided are employed in the effective value of the current supplied to the load 6, the switching frequency Fs in PWM modulation and the degree of modulation. The effective value of the current i0 is 2.70 A, which is a 27% reduction from the comparison target of the present embodiment being the reference.

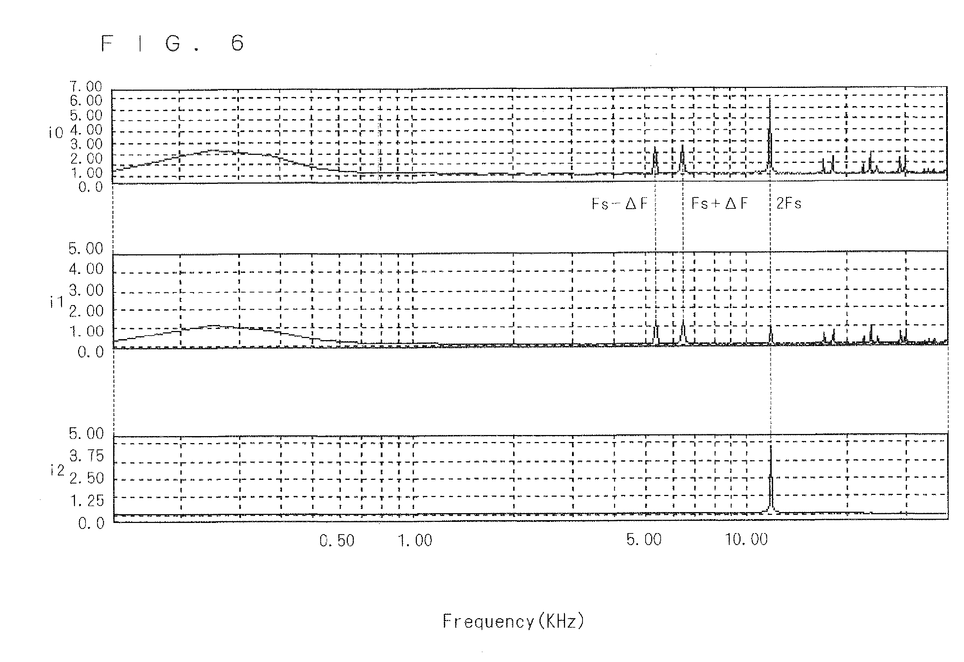

FIG. 6 is a graph showing simulation results of current spectra in the circuit in the case where the series resonant circuit 4 is provided. As in FIG. 4, the peak of the harmonic appears at the frequency of 2 Fs in the current i0, but the peak of the harmonic appears at the frequency of 2 Fs also in the current i2 flowing through the series resonant circuit 4. Further, in the current i1 flowing through the capacitor C1, the peak at the frequency of 2 Fs drops considerably compared with the graph of FIG. 4. This indicates that a large number of components having a frequency of 2 Fs of the current i0 flow through the series resonant circuit 4 as the current i2, whereby components based on the switching frequency are reduced in the current i 1 flowing through the capacitor C 1. The above reveals that the effects described in the embodiment above are obtained.

### Second Embodiment

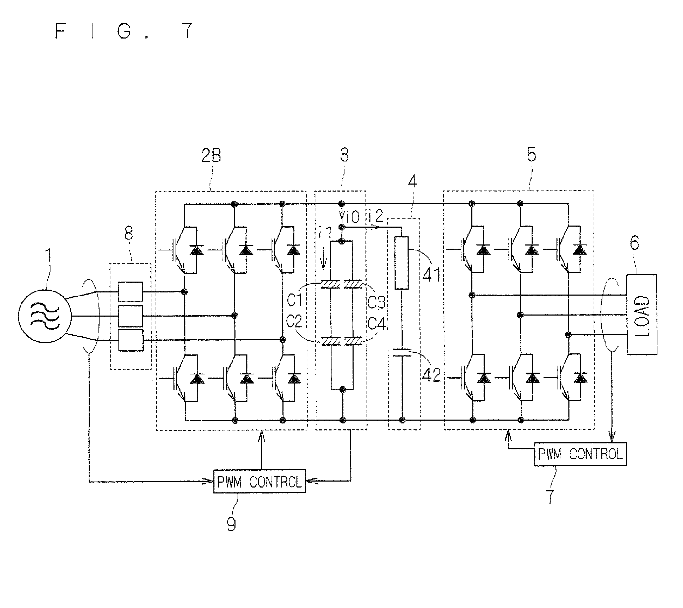

FIG. 7 is a circuit diagram according to a second embodiment, which is different from the configuration of the first embodiment shown in FIG. 2 in that an active converter 2B is used as the AC/DC converter 2. Along with this, a reactor group 8 including reactors for respective phases is provided on an input side of the active converter 2B. Each of the reactors provided for respective phases has an inductance of 3.5 mH. Moreover, there is also provided a PWM control unit 9 which controls switching of each of respective devices (for example, IGBTs are used) based on currents flowing through those reactors and a voltage between both ends of the DC link capacitor 3. The other configuration is the same as the configuration according to the first embodiment, such as the electrostatic capacitance and the inductance.

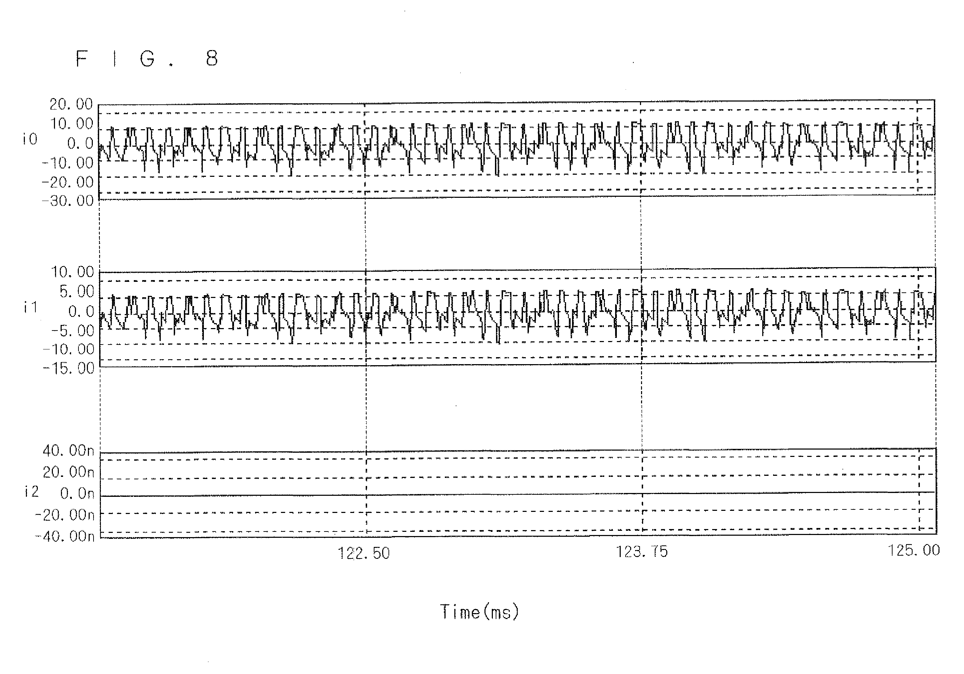

FIG. 8 is a graph showing simulation results of current waveforms in the circuit in the case where the series resonant circuit 4 is not provided (comparison target in the present embodiment). There is no path through which the current i2 flows because the circuit in the case where the series resonant circuit 4 is not provided is examined, but the current i2 is indicated by zero for the sake of convenience.

Here, an effective value of a current supplied to the load 6 is 10.2 A, a degree of modulation is 0.92, and an effective value of the current i0 is 7.20 A.

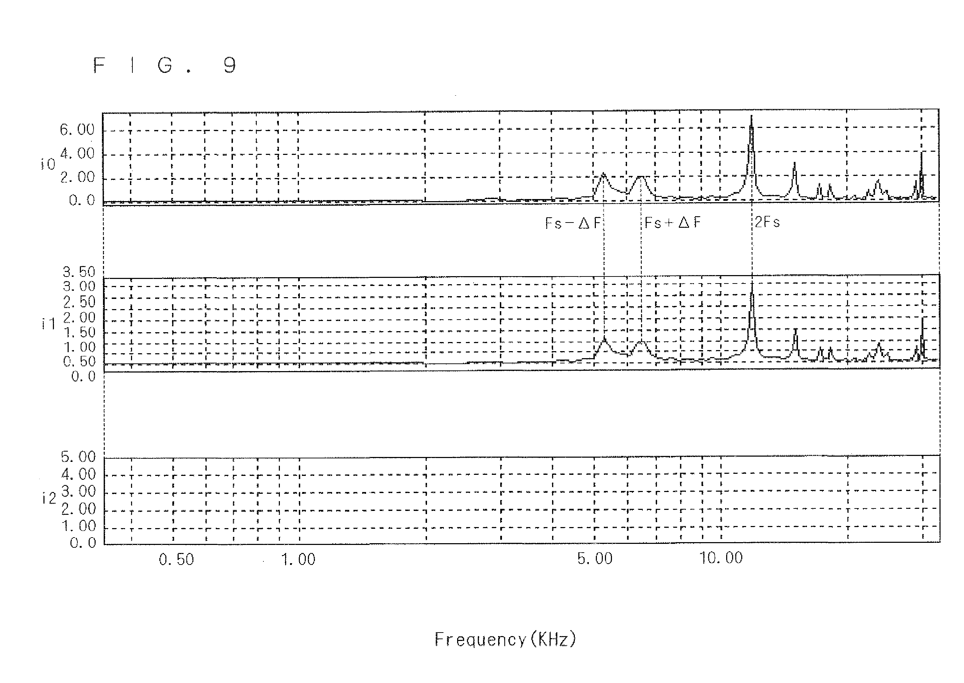

FIG. 9 is a graph showing simulation results of current spectra in the circuit in the case where the series resonant circuit 4 is not provided. The peak in PWM modulation appears at frequencies Fs-ΔF, Fs+ΔF, and 2Fs.

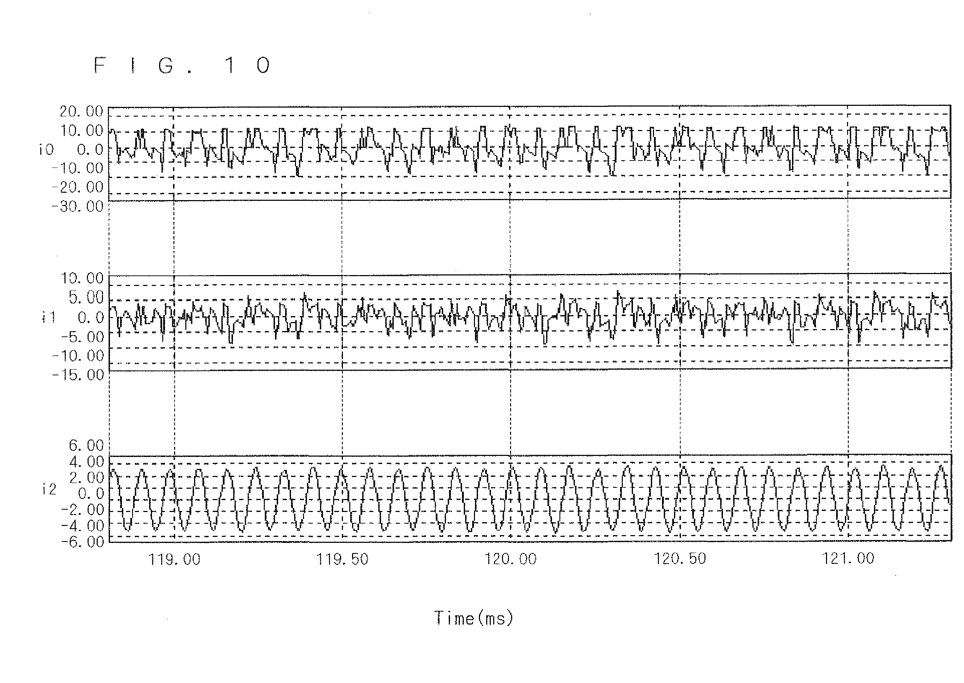

FIG. 10 is a graph showing simulation results of current waveforms in the circuit in the case where the series resonant circuit 4 is provided. In order to make conditions the same as in the case where the series resonant circuit 4 is not provided, the same conditions as in the case where the series resonant circuit 4 is not provided are employed in the effective value of the current supplied to the load 6, the switching frequency Fs in PWM modulation and the degree of modulation. The effective value of the current i0 is 2.50 A, which is a 29% reduction from the comparison target of the present embodiment being the reference.

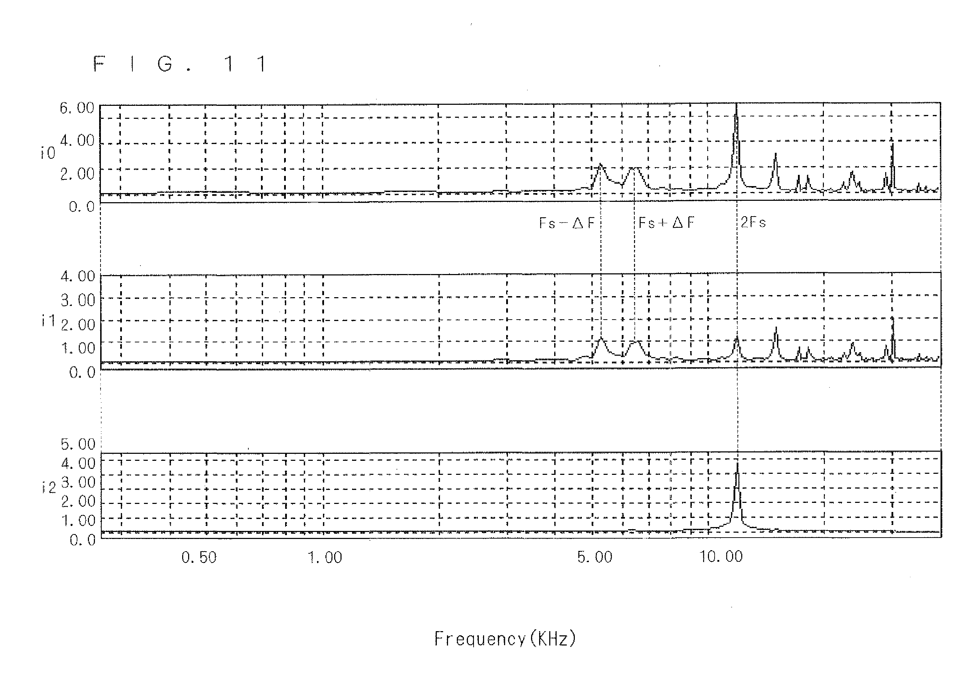

FIG. 11 is a graph showing simulation results of current spectra in the circuit in the case where the series resonant circuit 4 is provided. Compared with FIG. 9, in the current i1 flowing through the capacitor C1, the peak at the frequency of 2Fs drops considerably. This indicates that a large number of components having a frequency of 2 Fs of the current i0 flow through the series resonant circuit 4 as the current i2, whereby components based on the switching frequency are reduced in the current i1 flowing through the capacitor C1. The above reveals that the effects described in the embodiment above are obtained.

While the invention has been shown and described in detail, the foregoing description is in all aspects illustrative and not restrictive. It is therefore understood that numerous modifications and variations can be devised without departing from the scope of the invention.

## Claims

1. An inverter, comprising:
an electrolytic capacitor (3) receiving DC power;
a series resonant circuit (4) connected in parallel with said electrolytic capacitor; and
a switching device group (5) converting said DC power into AC power by switching using pulse width modulation.

2. The inverter according to Claim 1, wherein a resonance frequency of said series resonant circuit (4) is a switching frequency of said switching device group (5).

3. The inverter according to Claim 1, wherein a resonance frequency of said series resonant circuit (4) coincides with a frequency of one showing a largest component among harmonics of the switching frequency of said switching device group (5).

4. The inverter according to Claim 3, wherein the resonance frequency of said series resonant circuit (4) is twice as large as the switching frequency of said switching device group (5).

5. The inverter according to any one of Claims 1 to 4, wherein:
said series resonant circuit (4) has series connection between a resonant inductor (41) and a resonant capacitor (42); and
said resonant capacitor is a film capacitor.
